(19) Europäisches Patentamt
European Patent Office
Office européen des brevets

(11) **EP 4 782 297 A2**

(12) **EUROPEAN PATENT APPLICATION**

(43) Date of publication:
29.07.2026 Bulletin 2026/31

(21) Application number: 26184321.3

(22) Date of filing: 10.06.2026

(51) International Patent Classification (IPC):
**B60W 50/00** (2006.01) **B60W 60/00** (2020.01)

(52) Cooperative Patent Classification (CPC):
**B60W 50/0097; B60W 60/001;** B60W 2050/0008;
B60W 2050/0031; B60W 2050/0033

(84) Designated Contracting States:
**AL AT BE BG CH CY CZ DE DK EE ES FI FR GB
GR HR HU IE IS IT LI LT LU LV MC MD ME MK MT
NL NO PL PT RO RS SE SI SK SM TR**
Designated Extension States:
**BA**
Designated Validation States:
**GE KH LA MA TN**

(30) Priority: 13.06.2025 CN 202510792283

(71) Applicant: **Beijing Baidu Netcom
Science Technology Co., Ltd.
Beijing 100085 (CN)**

(72) Inventors:
• **CAO, Hongxu**
  **Beijing 100085 (CN)**
• **LIN, Jian**
  **Beijing 100085 (CN)**
• **ZHANG, Shuhao**
  **Beijing 100085 (CN)**
• **WEN, Boxuan**
  **Beijing 100085 (CN)**

(74) Representative: **Isarpatent
Patent- und Rechtsanwälte Part G mbB
Friedrichstrasse 31
80801 München (DE)**

(54) **JOINT LATERAL AND LONGITUDINAL CONTROL METHOD AND APPARATUS FOR AUTONOMOUS VEHICLE**

(57) The present disclosure provides a joint lateral and longitudinal control method and apparatus for an autonomous vehicle, an electronic device, and a medium, and relates to the technical field of autonomous driving, in particular to the technical field of trajectory tracking and model predictive control. A solution for implementation includes: obtaining a lateral-longitudinal coupled state prediction model of an autonomous vehicle and a desired trajectory; obtaining a current state quantity and a current control quantity of the autonomous vehicle; solving for a target control quantity for trajectory tracking using a model predictive control algorithm based on the current state quantity, the current control quantity, the lateral-longitudinal coupled state prediction model, and the desired trajectory, where the model predictive control includes quadratic programming, and a cost function of the quadratic programming includes at least a lateral-longitudinal decoupled target error; and controlling the autonomous vehicle to perform the trajectory tracking based on the target control quantity.

200

```
┌─────────────────────────────────────────────────────┐
│ Obtain a lateral-longitudinal coupled state          │ 210
│ prediction model of an autonomous vehicle and a      │
│ desired trajectory                                    │
└─────────────────────────────────────────────────────┘
                         │
                         ▼
┌─────────────────────────────────────────────────────┐
│ Obtain a current state quantity and a current        │ 220
│ control quantity of the autonomous vehicle           │
└─────────────────────────────────────────────────────┘
                         │
                         ▼
┌─────────────────────────────────────────────────────┐
│ Solve for a target control quantity using a model    │ 230
│ predictive control algorithm based on the current    │
│ state quantity, the current control quantity, the    │
│ lateral-longitudinal coupled state prediction        │
│ model, and the desired trajectory                    │
└─────────────────────────────────────────────────────┘
                         │
                         ▼
┌─────────────────────────────────────────────────────┐
│ Control the autonomous vehicle to perform            │ 240
│ trajectory tracking based on the target control      │
│ quantity                                              │
└─────────────────────────────────────────────────────┘
```

FIG. 2

EP 4 782 297 A2

**Description**

**TECHNICAL FIELD**

The present disclosure relates to the technical field of autonomous driving, in particular to the technical field of trajectory tracking and model predictive control, and specifically relates to a joint lateral and longitudinal control method and apparatus for an autonomous vehicle, a computer-readable storage medium, and a computer program product.

**BACKGROUND**

Trajectory tracking refers to constructing a vehicle system model to describe the motion state and behavior of a vehicle, and determining a control quantity for the vehicle based on a current motion state and a predetermined trajectory of the vehicle, to control the vehicle to travel along the predetermined trajectory based on the control quantity.

Model predictive control (MPC) is a strategy that solves control problems using optimization methods. Its main processes include:

(1) establishing a predictive model: A dynamic model (state prediction model) for a controlled object (e.g., an autonomous vehicle) is established;

(2) rolling optimization: For each time step, the dynamic model is used to predict a state of the controlled object over a future period of time based on a current state of the controlled object and a future control quantity, and to solve for an optimal sequence of control quantities online according to a certain performance index (a cost function), thereby using the first control quantity of the sequence of control quantities as an output for controlling the controlled object; and

(3) feedback correction: At a next time step, an actual output of the controlled object is detected, and a model-based prediction result is corrected based on the actual output; then the aforementioned rolling optimization is continued for the next time step.

In the related art, a control quantity for trajectory tracking of an autonomous vehicle can be optimized based on a model predictive control algorithm. A state prediction model can be established based on a dynamic model of the autonomous vehicle to predict the vehicle's state. A cost function can be established based on a deviation between a predicted state quantity and a desired state quantity. After rolling optimization, an optimized control quantity is output, thereby controlling the autonomous vehicle to perform trajectory tracking based on the optimized control quantity.

The approaches described in this section are not necessarily those that have been previously conceived or pursued. Unless otherwise indicated, it should not be assumed that any of the approaches described in this section qualify as prior art merely by virtue of their inclusion in this section. Similarly, issues mentioned in this section should not be assumed to have been recognized in any prior art, unless otherwise indicated.

**SUMMARY**

The present disclosure provides a joint lateral and longitudinal control method and apparatus for an autonomous vehicle, a computer-readable storage medium, and a computer program product.

According to an aspect of the present disclosure, a joint lateral and longitudinal control method for an autonomous vehicle is provided. The method includes: obtaining a lateral-longitudinal coupled state prediction model of the autonomous vehicle and a desired trajectory, where the lateral-longitudinal coupled state prediction model is for use in trajectory tracking for the autonomous vehicle; obtaining a current state quantity and a current control quantity of the autonomous vehicle, where the current state quantity indicates a motion state of the autonomous vehicle at a current time, and the current control quantity indicates control applied to the autonomous vehicle at the current time; solving for a target control quantity for the trajectory tracking using a model predictive control algorithm based on the current state quantity, the current control quantity, the lateral-longitudinal coupled state prediction model, and the desired trajectory, where the model predictive control algorithm includes quadratic programming, a cost function of the quadratic programming includes at least a lateral-longitudinal decoupled target error, the target error is obtained by performing lateral-longitudinal decoupling on an error between a first predicted state quantity output by the lateral-longitudinal coupled state prediction model and a first desired state quantity corresponding to the first predicted state quantity, and the first desired state quantity is associated with the desired trajectory; and controlling the autonomous vehicle to perform the trajectory tracking based on the target control quantity.

According to another aspect of the present disclosure, a joint lateral and longitudinal control apparatus for an autonomous vehicle is provided. The apparatus includes: a first module configured to obtain a lateral-longitudinal coupled state prediction model of the autonomous vehicle and a desired trajectory, where the lateral-longitudinal coupled state prediction model is for use in trajectory tracking for the autonomous vehicle; a second module configured to obtain a current state quantity and a current control quantity of the autonomous vehicle, where the current state quantity indicates a motion state of the autonomous vehicle at a current time, and the current control quantity indicates control applied to the autonomous vehicle at the current time; a third module configured to solve for a target control quantity for the trajectory tracking using a model predictive control algorithm based on the current state quantity, the current control quantity, the lateral-longitudinal coupled state prediction model, and the desired trajectory, where the model predictive control algorithm includes quadratic programming, a cost function of the quadratic programming includes at least a lateral-longitudinal decoupled target error, the target error is obtained by performing lateral-longitudinal decoupling on an error between a first predicted state quantity output by the lateral-longitudinal coupled state prediction model and a first desired state quantity corresponding to the first predicted state quantity, and the first desired state quantity is associated with the desired trajectory; and a fourth module configured to control the autonomous vehicle to perform the trajectory tracking based on the target control quantity.

According to another aspect of the present disclosure, a non-transitory computer-readable storage medium storing computer instructions is provided, where execution of the computer instructions causes a computer to perform the method described above.

According to another aspect of the present disclosure, a computer program product including a computer program is provided, where the computer program, when executed by a processor, causes the method described above to be implemented.

According to the joint lateral and longitudinal control method for an autonomous vehicle provided in one or more embodiments of the present disclosure, when solving for a target control quantity for trajectory tracking of the autonomous vehicle through optimization based on a model predictive control algorithm, a lateral-longitudinal coupled state prediction model of the autonomous vehicle is established to predict a motion state of the autonomous vehicle, and during a rolling optimization process, a lateral-longitudinal decoupled error quantity is used as a cost function to solve for an optimized sequence of control quantities. This approach, which combines "lateral-longitudinal coupled state prediction" with "lateral-longitudinal decoupled optimization", fully considers the interaction of control quantities in lateral and longitudinal directions, effectively coordinating the overall balance and accuracy of output control quantities in the lateral and longitudinal directions, and improving the vehicle driving stability during the trajectory tracking based on the target control quantity.

It should be understood that the descriptions in this section are not intended to identify critical or essential features of the embodiments of the present disclosure, nor are they intended to limit the scope of the present disclosure. Other features of the present disclosure will be readily understood from the following description.

## BRIEF DESCRIPTIONS OF THE DRAWINGS

The accompanying drawings illustratively depict example embodiments and form a part of the specification, serving to illustrate example implementations of the embodiments together with the written description of the specification. The embodiments shown are intended for illustrative purposes only and do not limit the scope of the claims. Throughout the accompanying drawings, the same reference numerals denote similar, but not necessarily identical, elements.

FIG. 1 is a schematic diagram illustrating an example system in which various methods described herein can be implemented according to an example embodiment;

FIG. 2 is a flowchart of a joint lateral and longitudinal control method for an autonomous vehicle according to an embodiment of the present disclosure;

FIG. 3 is a partial flowchart of another joint lateral and longitudinal control method for an autonomous vehicle according to an embodiment of the present disclosure;

FIG. 4 is a schematic diagram of force analysis of a dynamic model of an autonomous vehicle according to an embodiment of the present disclosure;

FIG. 5 is a partial flowchart of another joint lateral and longitudinal control method for an autonomous vehicle according to an embodiment of the present disclosure;

FIG. 6 is a partial flowchart of another joint lateral and longitudinal control method for an autonomous vehicle according to an embodiment of the present disclosure;

FIG. 7 is a partial flowchart of another joint lateral and longitudinal control method for an autonomous vehicle according to an embodiment of the present disclosure;

FIG. 8 is a structural block diagram of a joint lateral and longitudinal control apparatus for an autonomous vehicle according to an embodiment of the present disclosure; and

FIG. 9 is a structural block diagram of an example electronic device that can be used to implement an embodiment of the present disclosure.

## DETAILED DESCRIPTION OF EMBODIMENTS

The following description of example embodiments of the present disclosure is made with reference to the accompanying drawings, which includes various details of the embodiments of the present disclosure to aid understanding and should be considered as merely illustrative. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from another. In some examples, a first element and a second element may refer to a same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of the listed terms.

In the related art, a control quantity for trajectory tracking of an autonomous vehicle can be optimized based on a model predictive control algorithm. A state prediction model can be established based on a dynamic model of the autonomous vehicle to predict the vehicle's state. A cost function can be established based on a deviation between a predicted state quantity and a desired state quantity. After rolling optimization, an optimized control quantity is output, thereby controlling the autonomous vehicle to perform trajectory tracking based on the optimized control quantity.

However, since state quantities in a vehicle dynamic model are not subjected to lateral-longitudinal decoupling, what is constructed based on the vehicle dynamic model is a lateral-longitudinal coupled state prediction model, and what is predicted through the model is a lateral-longitudinal coupled predicted state quantity, and an error between the predicted state quantity and a desired state quantity is also lateral-longitudinal coupled. However, vehicle trajectory tracking has different sensitivities to an error in lateral and longitudinal directions. Therefore, when a cost function is constructed based on a lateral-longitudinal coupled error for solving quadratic programming, it is difficult to achieve effective balance in lateral and longitudinal control of an output control quantity, resulting in a suboptimal final control effect.

To solve the aforementioned problem, the present disclosure provides a joint lateral and longitudinal control method for an autonomous vehicle. When solving for a target control quantity for trajectory tracking of the autonomous vehicle through optimization based on a model predictive control algorithm, a lateral-longitudinal coupled state prediction model of the autonomous vehicle is established to predict a motion state of the autonomous vehicle, and during a rolling optimization process, a lateral-longitudinal decoupled error quantity is used as a cost function to solve for an optimized sequence of control quantities. This approach, which combines "lateral-longitudinal coupled state prediction" with "lateral-longitudinal decoupled optimization", fully considers the interaction of control quantities in lateral and longitudinal directions, effectively coordinating the overall balance and accuracy of output control quantities in the lateral and longitudinal directions, and improving the vehicle driving stability during the trajectory tracking based on the target control quantity.

The embodiments of the present disclosure will be described below in detail with reference to the accompanying drawings.

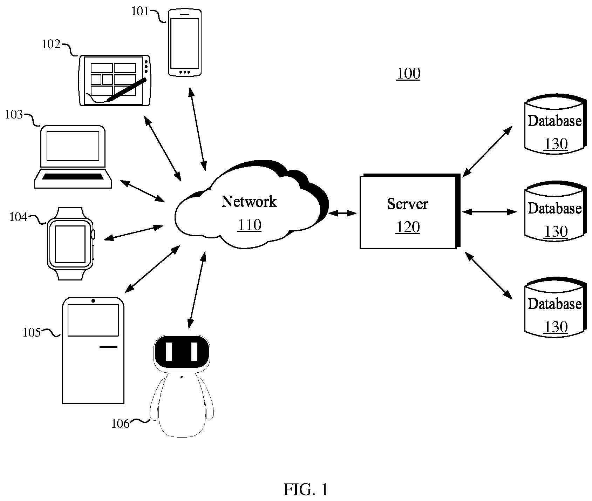

FIG. 1 is a schematic diagram of an example system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communication networks 110 that couple the one or more client devices to the server 120. The client devices 101, 102, 103, 104, 105, and 106 may be configured to execute one or more applications.

In an embodiment of the present disclosure, the server 120 can run one or more services or software applications that enable a joint lateral and longitudinal control method for an autonomous vehicle according to the present disclosure to be performed.

In some embodiments, the server 120 may further provide other services or software applications that may include a non-virtual environment and a virtual environment. In some embodiments, these services may be provided as web-based services or cloud services, for example, provided to a user of the client devices 101, 102, 103, 104, 105, and/or 106 in a software-as-a-service (SaaS) model.

In the configuration shown in FIG. 1, the server 120 may include one or more components that implement functions performed by the server 120. These components may include software components, hardware components, or a combination thereof that can be executed by one or more processors. The user operating the client devices 101, 102, 103, 104, 105, and/or 106 may sequentially use one or more client applications to interact with the server 120, to use the services provided by these components. It should be understood that various different system configurations are possible, and may be different from that of the system 100. Therefore, FIG. 1 is an example of the system for implementing the method described herein, and is not intended to be limiting.

The user may use the client devices 101, 102, 103, 104, 105, and/or 106 to perform the joint lateral and longitudinal control method for an autonomous vehicle. The client device may provide an interface that enables the user of the client device to interact with the client device. The client device may further output information to the user via the interface. Although FIG. 1 shows only six client devices, those skilled in the art will understand that any number of client devices can be supported in the present disclosure.

The client devices 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software applications and operating systems, such as MICROSOFT Windows, APPLE iOS, a UNIX-like operating system, and a Linux or Linux-like operating system (e.g., GOOGLE Chrome OS), or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various applications, such as various Internet-related applications, communication applications (e.g., email applications), and short message service (SMS) applications, and can use various communication protocols.

The network 110 may be any type of network well known to those skilled in the art, and may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (e.g., Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above-mentioned operating systems and any commercially available server operating system. The server 120 can also run any one of various additional server applications and/or middle-tier applications, including an HTTP server, an FTP server, a CGI server, a JAVA server, a database server, etc.

In some implementations, the server 120 may include one or more applications to analyze and merge data feeds and/or event updates received from users of the client devices 101, 102, 103, 104, 105, and 106. The server 120 may further include one or more applications to display the data feeds and/or real-time events via one or more display devices of the client devices 101, 102, 103, 104, 105, and 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as a text file. The databases 130 may reside in various positions. For example, a database used by the server 120 may be locally in the server 120, or may be remote from the server 120 and may communicate with the server 120 via a network-based or dedicated connection. The database 130 may be of different types. In some embodiments, the database used by the server 120 may be, for example, a relational database. One or more of these databases can store, update, and retrieve data from or to the database, in response to a command.

In some embodiments, one or more of the databases 130 may further be used by an application to store application data. The database used by the application may be of different types, for example, may be a key-value repository, an object repository, or a regular repository backed by a file system.

The system 100 of FIG. 1 may be configured and operated in various manners, so that the various methods and apparatuses described according to the present disclosure can be applied.

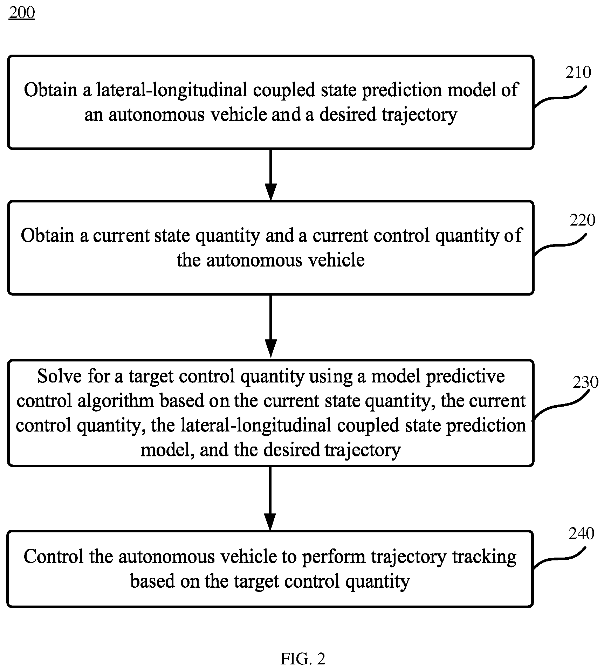

FIG. 2 is a flowchart of a joint lateral and longitudinal control method for an autonomous vehicle according to an embodiment of the present disclosure.

As shown in FIG. 2, the joint lateral and longitudinal control method 200 for an autonomous vehicle includes the following steps:

step 210 of obtaining a lateral-longitudinal coupled state prediction model of the autonomous vehicle and a desired trajectory, where the lateral-longitudinal coupled state prediction model is for use in trajectory tracking for the autonomous vehicle;

step 220 of obtaining a current state quantity and a current control quantity of the autonomous vehicle, where the current state quantity indicates a motion state of the autonomous vehicle at a current time, and wherein the current control quantity indicates control applied to the autonomous vehicle at the current time;

step 230 of solving for a target control quantity for the trajectory tracking using a model predictive control algorithm based on the current state quantity, the current control quantity, the lateral-longitudinal coupled state prediction model, and the desired trajectory, where the model predictive control algorithm includes quadratic programming, a cost function of the quadratic programming includes at least a lateral-longitudinal decoupled target error, the target error is obtained by performing lateral-longitudinal decoupling on an error between a first predicted state quantity output by the lateral-longitudinal coupled state prediction model and a first desired state quantity corresponding to the first predicted state quantity, and the first desired state quantity is associated with the desired trajectory; and

step 240 of controlling the autonomous vehicle to perform the trajectory tracking based on the target control quantity.

Thus, when solving for a target control quantity for trajectory tracking of the autonomous vehicle through optimization based on a model predictive control algorithm, a lateral-longitudinal coupled state prediction model of the autonomous vehicle is established to predict a motion state of the autonomous vehicle, and during a rolling optimization process, a lateral-longitudinal decoupled error quantity is used as a cost function to solve for an optimized sequence of control quantities. This approach, which combines "lateral-longitudinal coupled state prediction" with "lateral-longitudinal decoupled optimization", fully considers the interaction of control quantities in lateral and longitudinal directions, effectively coordinating the overall balance and accuracy of output control quantities in the lateral and longitudinal directions, and improving the vehicle driving stability during the trajectory tracking based on the target control quantity.

In particular, for extreme operating conditions such as sharp turns and emergency obstacle avoidance, a vehicle steering angle can be adjusted naturally and smoothly during acceleration and braking processes, effectively improving driving stability and riding comfort of the autonomous vehicle.

In step 210, the lateral-longitudinal coupled state prediction model is used for describing a motion state of and control applied to the autonomous vehicle, and the desired trajectory is used as a reference trajectory for the autonomous vehicle to perform trajectory tracking.

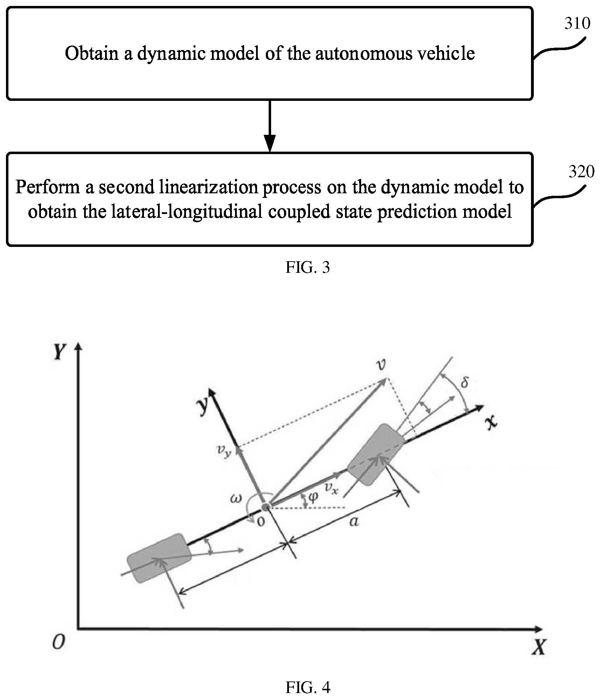

FIG. 3 is a partial flowchart of another joint lateral and longitudinal control method for an autonomous vehicle according to an embodiment of the present disclosure.

According to some embodiments, as shown in FIG. 3, step 210 includes the following steps:

step 310 of obtaining a dynamic model of the autonomous vehicle; and
step 320 of performing a second linearization process on the dynamic model to obtain the lateral-longitudinal coupled state prediction model.

The dynamic model of the autonomous vehicle is typically a nonlinear model, and state prediction based on the nonlinear model requires a relatively large amount of computing power. Therefore, by performing a linearization process on the nonlinear dynamic model, computational complexity can be reduced, and processing efficiency can be improved.

According to some embodiments, step 310 includes:

determining an initial vehicle model based on at least position coordinates of the autonomous vehicle in a world coordinate system, a lateral speed along a lateral axis direction in a vehicle coordinate system, a longitudinal speed along a longitudinal axis direction in the vehicle coordinate system, a yaw angle, and a yaw rate, where the lateral axis direction is along the vehicle's front orientation, and the longitudinal axis direction is parallel to the ground and perpendicular to the lateral axis direction.

By constructing the dynamic model of the autonomous vehicle based on the plurality of state quantities, it is possible to reasonably simplify the model on the basis of accurately describing a vehicle motion state, thereby improving processing efficiency of subsequent model predictive control.

FIG. 4 is a schematic diagram of force analysis of a dynamic model of an autonomous vehicle according to an embodiment of the present disclosure.

In step 310, for example, referring to FIG. 4, a world coordinate system XOY and a vehicle coordinate system xoy are established, and based on kinematic constraints of the autonomous vehicle, the dynamic model thereof can be constructed as the following system of nonlinear state equations:

$$\dot{X} = f(X, U) = \begin{bmatrix} v_x \cos\varphi - v_y \sin\varphi \\ v_x \sin\varphi + v_y \sin\varphi \\ \omega \\ a + v_y \dot{\varphi} \\ \dfrac{2(C_f + C_r)v_y + 2(C_f l_f - C_r l_r)\dot{\varphi}}{mv_x} - \dfrac{2C_f \delta}{m} - v_x \dot{\varphi} \\ \dfrac{2(C_f l_f - C_r l_r)v_y + 2(C_f l_f^2 + C_r l_r^2)\dot{\varphi}}{I_z v_x} - \dfrac{2C_f l_f \delta}{I_z} \end{bmatrix}$$

where X represents a state quantity indicating a motion state of the autonomous vehicle at time t, U represents a control quantity indicating control applied to the autonomous vehicle at time t, $X = f(X, U)$ represents a motion state $X$ of the autonomous vehicle at time t+1 represented by $X$ and $U$, $v_x$ represents a speed of the autonomous vehicle along an x-axis direction in the vehicle coordinate system, $v_y$ represents a speed of the autonomous vehicle along a y-axis direction in the vehicle coordinate system, $\varphi$ represents a yaw angle of the autonomous vehicle, $\omega$ represents a yaw rate of the autonomous vehicle, $a$ represents a distance from a center of mass of the autonomous vehicle to a center of a front axle (an inherent property of the vehicle), $\dot{\varphi}$ represents a derivative of the yaw angle of the autonomous vehicle, $C_f$ represents a cornering stiffness coefficient of a front wheel of the autonomous vehicle, $C_r$ represents a cornering stiffness coefficient of a rear wheel of the autonomous vehicle, $l_f$ represents a length between the front wheel of the autonomous vehicle and a geometric center point of the vehicle, $l_r$ represents a length between the rear wheel of the autonomous vehicle and the geometric center point of the vehicle, $\delta$ represents a slip angle of a wheel of the autonomous vehicle, $m$ represents a mass of the autonomous vehicle, and $I_z$ represents a moment of inertia of the autonomous vehicle about a z-axis.

It can be seen that the dynamic model is composed of six state equations associated with different state quantities. The first state equation is associated with a position of the autonomous vehicle along the x-axis direction in the world coordinate system, the second state equation is associated with a position of the autonomous vehicle along the y-axis direction in the world coordinate system, the third state equation is associated with the yaw angle of the autonomous vehicle, the fourth state equation is associated with the speed of the autonomous vehicle along the x-axis direction in the vehicle coordinate system, the fifth state equation is associated with the speed of the autonomous vehicle along the y-axis direction in the vehicle coordinate system, and the sixth state equation is associated with the yaw rate of the autonomous vehicle.

It can be understood that $\dot{X}$ is a state quantity at time t+1 represented by the state quantity X and the control quantity $U$ at time t. Therefore, the above six state equations are all derivative forms of mechanical models of the related state quantities, thereby enabling time-domain-based prediction of state quantities.

In addition, it should be noted that the mechanical models of the above six related state quantities can be established based on relevant content of theoretical mechanics. The specific derivation process thereof belongs to the prior art, which is not described in detail herein.

In step 320, the second linearization process includes a first-order Taylor expansion and bilinear discretization.

Referring to the example of the dynamic model, the following linear time-varying model can be obtained through the first-order Taylor expansion:

$$\dot{X} = \left.\frac{\partial f}{\partial X}\right|_{X_0,U_0} X + \left.\frac{\partial f}{\partial U}\right|_{X_0,U_0} U + f(X_0, U_0) - \left.\frac{\partial f}{\partial X}\right|_{X_0,U_0} X_0 - \left.\frac{\partial f}{\partial U}\right|_{X_0,U_0} U_0$$

where $X_0$ represents a state quantity indicating a motion state of the autonomous vehicle at an initial time (e.g., the current time), and $U_0$ represents a control quantity indicating control applied to the autonomous vehicle at the initial time.

Further, since the linear time-varying model is a continuous model and cannot be directly used as a state prediction model, the bilinear discretization can be performed on the expanded model, thereby obtaining the lateral-longitudinal coupled state prediction model capable of recursively predicting a sequence of predicted state quantities of the autonomous vehicle within a certain time domain.

It can be understood that each state equation in the dynamic model is a lateral-longitudinal coupled state equation. Accordingly, the linear time-varying model obtained after the second linearization process is the lateral-longitudinal coupled state prediction model.

In step 220, the current time can be regarded as a current time step, so that a state quantity of the autonomous vehicle in a subsequent time domain can be predicted based on the current state quantity and the current control quantity at the current time.

In step 230, specific state quantities associated with the target error are determined based on performance to be evaluated.

According to some embodiments, the target error includes a lateral position error, a longitudinal position error, a lateral speed error, and a longitudinal speed error.

Thus, by using a position and a speed as performance evaluation indicators and performing lateral-longitudinal decoupling on errors corresponding thereto to construct the cost function of the quadratic programming, it is possible to control the autonomous vehicle more accurately along the desired trajectory as much as possible, thereby improving the overall control effect.

For example, the cost function is a system of nonlinear equations at least including the following error equations:

$$e_{pc} = cos\varphi_{ref}(x - x_{ref}) + sin\varphi_{ref}(y - y_{ref})$$

$$e_{pl} = -sin\varphi_{ref}(x - x_{ref}) + cos\varphi_{ref}(y - y_{ref})$$

$$e_{vc} = v_x cos(\varphi - \varphi_{ref}) - v_y sin(\varphi - \varphi_{ref}) - v_{ref}$$

$$e_{vl} = v_x sin(\varphi - \varphi_{ref}) + v_y cos(\varphi - \varphi_{ref})$$

where $e_{pc}$ represents a longitudinal position error, $e_{pl}$ represents a lateral position error, $e_{vc}$ represents a longitudinal speed error, $e_{vl}$ represents a lateral speed error, $\varphi_{ref}$ represents a desired yaw angle of the autonomous vehicle, $\varphi$ represents a predicted yaw angle of the autonomous vehicle, $x_{ref}$ represents a desired lateral position of the autonomous vehicle in the world coordinate system, $x$ represents a predicted lateral position of the autonomous vehicle in the world coordinate system, $Yref$ represents a desired longitudinal position of the autonomous vehicle in the world coordinate system, and Y represents a predicted longitudinal position of the autonomous vehicle in the world coordinate system.

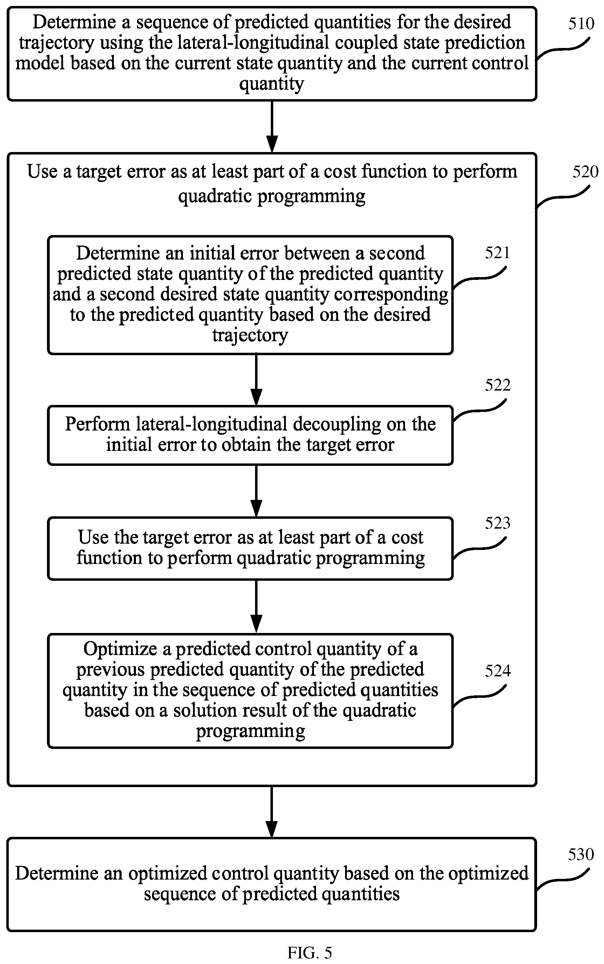

FIG. 5 is a partial flowchart of another joint lateral and longitudinal control method for an autonomous vehicle according to an embodiment of the present disclosure.

According to some embodiments, as shown in FIG. 5, step 230 includes the following steps:

step 510 of determining a sequence of predicted quantities for the desired trajectory using the lateral-longitudinal coupled state prediction model based on the current state quantity and the current control quantity, where each predicted quantity in the sequence of predicted quantities includes a second predicted state quantity indicating a motion state of the autonomous vehicle at a corresponding time, and each predicted quantity further includes a predicted control quantity indicating control applied to the autonomous vehicle at the corresponding time;

step 520 including, for each predicted quantity:

step 521 of determining an initial error between the second predicted state quantity of the predicted quantity and a second desired state quantity corresponding to the predicted quantity based on the desired trajectory;

step 522 of performing the lateral-longitudinal decoupling on the initial error to obtain the target error;

step 523 of performing the quadratic programming by using the target error as at least part of the cost function; and

step 524 of optimizing a predicted control quantity of a previous predicted quantity of the predicted quantity in the sequence of predicted quantities based on a solution result of the quadratic programming; and

step 530 of determining an optimized control quantity based on the optimized sequence of predicted quantities.

By performing the lateral-longitudinal decoupling on the initial error to obtain the target error, and constructing the cost function based on the target error for solving the quadratic programming, it is possible to effectively balance different sensitivities to errors in lateral and longitudinal directions in trajectory tracking, thereby improving the overall effect of control optimization.

In step 510, in the model predictive control, the predicted quantities included in the sequence of predicted quantities correspond to a finite number of future time steps for performing the trajectory tracking for the desired trajectory, so that rolling optimization and feedback correction can be performed again at a next time after the optimization for the current time.

It can be understood that a derivation process of outputting the sequence of predicted quantities for a target time domain through matrix transformation and iterative computation belongs to the prior art, which is not described in detail herein.

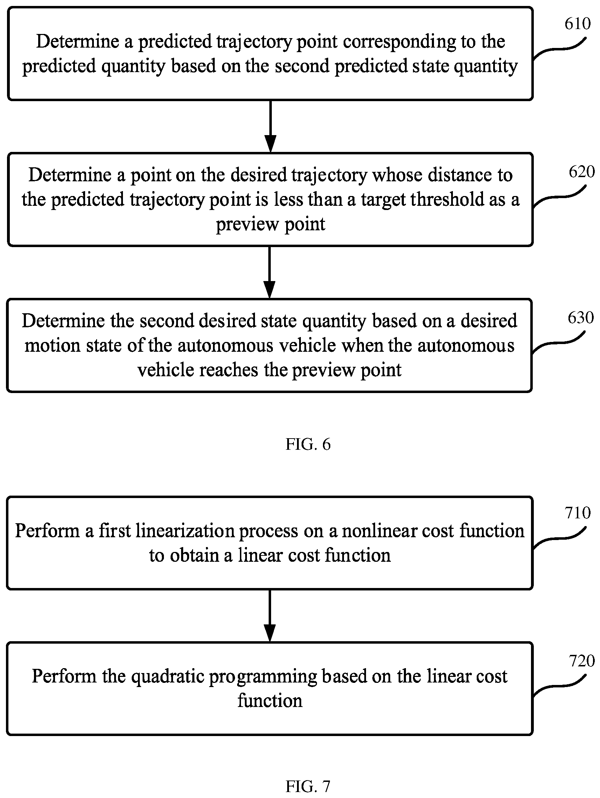

FIG. 6 is a partial flowchart of another joint lateral and longitudinal control method for an autonomous vehicle according to an embodiment of the present disclosure.

In step 520, according to some embodiments, as shown in FIG. 5, step 521 includes the following steps:

step 610 of determining a predicted trajectory point corresponding to the predicted quantity based on the second predicted state quantity;

step 620 of determining a point on the desired trajectory whose distance to the predicted trajectory point is less than a target threshold as a preview point; and

step 630 of determining the second desired state quantity based on a desired motion state of the autonomous vehicle when the autonomous vehicle reaches the preview point.

Thus, during the optimization process for the trajectory tracking, the preview point can be determined based on the distance between the predicted trajectory point and a desired trajectory point, and a desired motion state at the preview point is used as an optimization benchmark, eliminating the need to project the predicted trajectory point onto the desired trajectory. This can effectively reduce a probability of a trajectory jump, making the finally output optimized control quantity more stable, and improving consistency between an actual motion trajectory of the autonomous vehicle and a desired motion trajectory.

In step 620, the target threshold is, for example, 0.1 m, 0.5 m, or 1 m. For example, the preview point is a point on the desired trajectory having the shortest straight-line distance to the predicted trajectory point.

In step 630, a plurality of desired trajectory points are pre-selected from the desired trajectory, and the desired motion state (e.g., information such as a position, a speed, and an acceleration) corresponding to each desired trajectory point can be determined through a trajectory planning model and stored for use in model predictive control.

According to some embodiments, step 530 includes:

using a predicted control quantity included in a first predicted quantity in the optimized sequence of predicted quantities as the optimized control quantity.

Since the model predictive control is based on an optimization solution within a finite time domain, using only the predicted control quantity of the first predicted quantity as the optimized control quantity to perform control for the current time enables control for the next time step to be unaffected by the prediction error from the previous time step, further improving control accuracy and stability.

FIG. 7 is a partial flowchart of another joint lateral and longitudinal control method for an autonomous vehicle according to an embodiment of the present disclosure.

According to some embodiments, the cost function is a nonlinear function, and as shown in FIG. 7, step 523 includes the following steps:

step 710 of performing a first linearization process on the cost function to obtain a linear cost function; and
step 720 of performing the quadratic programming based on the linear cost function.

The cost function constructed based on the target error is typically a system of nonlinear equations, and a linearization process performed thereon can further reduce computational difficulty and expand their applicability.

In step 523, the specific process of the optimization solution of the quadratic programming based on the cost function belongs to the prior art, which is not described in detail herein.

In an example, in addition to the cost function, further constraints are added to the quadratic programming solution. For example, constraints are added based on actual operating conditions for a tire slip angle, a front wheel steering angle, an acceleration, a center-of-mass slip angle, etc. of the autonomous vehicle, to improve effectiveness of a solution result of the quadratic programming.

In step 524, since the predicted state quantity for the current time step is determined by the predicted state quantity and the predicted control quantity for the previous time step, the solution result for the current time step optimizes the predicted control quantity for the previous time step.

In step 710, the first linearization process is, for example, a first-order Taylor expansion.

Referring to the example of the vehicle dynamic model, the linear cost function is as follows:

$$e = e(X_0, U_0) + \left.\frac{\partial e}{\partial X}\right|_{X_0, U_0} (X - X_0) + \left.\frac{\partial e}{\partial U}\right|_{X_0, U_0} (U - U_0)$$

Thus, a quadratic form can be constructed based on the linear cost function, to complete a cost function design for the quadratic programming, thereby enabling the optimization solution process based on the model predictive control algorithm and obtaining the target control quantity.

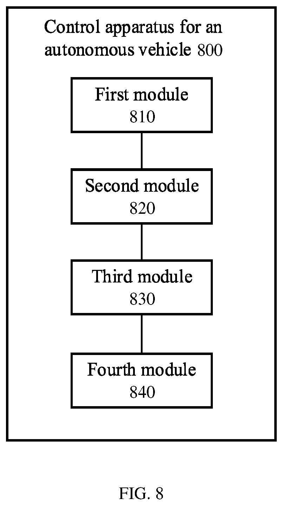

According to another aspect of the present disclosure, a joint lateral and longitudinal control apparatus for an autonomous vehicle is provided. As shown in FIG. 8, the joint lateral and longitudinal control apparatus for an autonomous vehicle 800 includes: a first module 810 configured to obtain a lateral-longitudinal coupled state prediction model of the autonomous vehicle and a desired trajectory, where the lateral-longitudinal coupled state prediction model is for use in trajectory tracking for the autonomous vehicle; a second module 820 configured to obtain a current state quantity and a current control quantity of the autonomous vehicle, where the current state quantity indicates a motion state of the autonomous vehicle at a current time, and the current control quantity indicates control applied to the autonomous vehicle at the current time; a third module 830 configured to solve for a target control quantity for the trajectory tracking using a model predictive control algorithm based on the current state quantity, the current control quantity, the lateral-longitudinal coupled state prediction model, and the desired trajectory, where the model predictive control algorithm includes quadratic programming, a cost function of the quadratic programming includes at least a lateral-longitudinal decoupled target error, the target error is obtained by performing lateral-longitudinal decoupling on an error between a first predicted state quantity output by the lateral-longitudinal coupled state prediction model and a corresponding first desired state quantity, and the first desired state quantity is associated with the desired trajectory; and a fourth module 840 configured to control the autonomous vehicle to perform the trajectory tracking based on the target control quantity.

According to another aspect of the present disclosure, an electronic device is further provided. The electronic device includes: at least one processor; and a memory communicatively connected to the at least one processor, where the memory stores instructions executable by the at least one processor, and the instructions, when executed by the at least one processor, cause the at least one processor to perform the method described above.

According to another aspect of the present disclosure, a non-transitory computer-readable storage medium storing computer instructions is further provided, where execution of the computer instructions causes a computer to perform the method described above.

According to another aspect of the present disclosure, a computer program product including a computer program is further provided, where the computer program, when executed by a processor, causes the method described above to be implemented.

According to another aspect of the present disclosure, an autonomous vehicle is further provided. The autonomous vehicle includes the electronic device as described above.

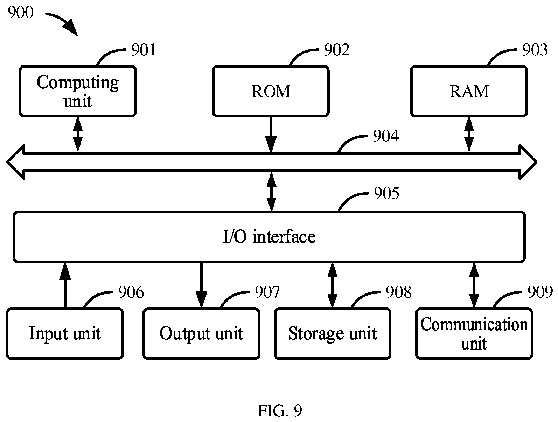

As shown in FIG. 9, the electronic device 900 includes a computing unit 901, the computing unit may perform various appropriate actions and processing according to a computer program stored in a read-only memory (ROM) 902 or a computer program loaded from a storage unit 908 to a random access memory (RAM) 903. The RAM 903 may further store various programs and data required for the operation of the electronic device 900. The computing unit 901, the ROM 902, and the RAM 903 are connected to each other through a bus 904. An input/output (I/O) interface 905 is also connected to the bus 904.

A plurality of components in the electronic device 900 are connected to the I/O interface 905, including: an input unit 906, an output unit 907, the storage unit 908, and a communication unit 909. The input unit 906 may be any type of device capable of inputting information to the electronic device 900, the input unit 906 may receive input digit or character information and generate a key signal input related to user settings and/or function control of the electronic device, and may include, but is not limited to, a mouse, a keyboard, a touchscreen, a trackpad, a trackball, a joystick, a microphone, and/or a remote controller. The output unit 907 may be any type of device capable of presenting information, and may include, but is not limited to, a display, a speaker, a video/audio output terminal, a vibrator, and/or a printer. The storage unit 908 may include, but is not limited to, a magnetic disk and an optical disk. The communication unit 909 allows the electronic device 900 to exchange information/data with other devices via a computer network such as the Internet and/or various telecommunication networks, and may include, but is not limited to, a modem, a network interface card, an infrared communication device, a wireless communication transceiver, and/or a chipset, for example, a Bluetooth™ device, an 802.11 device, a Wi-Fi device, a WiMax device, and/or a cellular communication device.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units on which machine learning model algorithms run, a digital signal processor (DSP), and any appropriate processor, controller, microcontroller, etc. The computing unit 901 performs the various methods and processes described above, for example, a GPU-based matrix computing method. For example, in some embodiments, the GPU-based matrix computing method may be implemented as a computer software program, and may be tangibly included in a machine-readable medium, for example, the storage unit 908. In some embodiments, a part or all of the computer program may be loaded and/or installed onto the electronic device 900 via the ROM 902 and/or the communication unit 909. When the computer program is loaded into the RAM 903 and executed by the computing unit 901, one or more steps of the GPU-based matrix computing method described above can be performed. Alternatively, in other embodiments, the computing unit 901 may be configured, by any other suitable means (for example, by means of firmware), to perform the GPU-based matrix computing method.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logic device (CPLD), computer hardware, firmware, software, and/or a combination thereof. These various implementations may include implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input means, and at least one output means, and transmit data and instructions to the storage system, the at least one input apparatus, and the at least one output means.

Program codes used to implement the method of the present disclosure can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing means (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data server), in a computing system including a middleware component (for example, an application server), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), and the Internet.

A computer system may include a client and a server. The client and the server are generally far away from each other and usually interact through a communication network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, successively, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely example embodiments or examples, and the scope of the present disclosure is not limited by these embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A joint lateral and longitudinal control method for an autonomous vehicle, comprising:

   Obtaining (S210) a lateral-longitudinal coupled state prediction model of the autonomous vehicle and a desired trajectory, wherein the lateral-longitudinal coupled state prediction model is for use in trajectory tracking for the autonomous vehicle;
   obtaining (S220) a current state quantity and a current control quantity of the autonomous vehicle, wherein the current state quantity indicates a motion state of the autonomous vehicle at a current time, and wherein the current control quantity indicates control applied to the autonomous vehicle at the current time;
   solving (S230) for a target control quantity for the trajectory tracking using a model predictive control algorithm based on the current state quantity, the current control quantity, the lateral-longitudinal coupled state prediction model, and the desired trajectory, wherein the model predictive control algorithm includes quadratic programming, wherein a cost function of the quadratic programming includes at least a lateral-longitudinal decoupled target error, wherein the target error is obtained by performing lateral-longitudinal decoupling on an error between a first predicted state quantity output by the lateral-longitudinal coupled state prediction model and a first desired state quantity corresponding to the first predicted state quantity, and wherein the first desired state quantity is associated with the desired trajectory; and
   controlling (S240) the autonomous vehicle to perform the trajectory tracking based on the target control quantity.

2. The method according to claim 1, wherein the target error comprises a lateral position error, a longitudinal position error, a lateral speed error, and a longitudinal speed error.

3. The method according to claim 1 or 2, wherein solving for the target control quantity for the trajectory tracking using the model predictive control algorithm based on the current state quantity, the current control quantity, the lateral-longitudinal coupled state prediction model, and the desired trajectory comprises:

   determining a sequence of predicted quantities for use in tracking the desired trajectory using the lateral-longitudinal coupled state prediction model based on the current state quantity and the current control quantity, wherein each predicted quantity in the sequence of predicted quantities includes a second predicted state quantity indicating a motion state of the autonomous vehicle at a corresponding time, and wherein each predicted quantity further includes a predicted control quantity indicating control applied to the autonomous vehicle at the corresponding time;
   for each predicted quantity in the sequence of predicted quantities,

      determining an initial error between the second predicted state quantity of the predicted quantity and a second desired state quantity corresponding to the predicted quantity based on the desired trajectory;
      performing the lateral-longitudinal decoupling on the initial error to obtain the target error;
      performing the quadratic programming using the target error as at least a part of the cost function; and
      optimizing a predicted control quantity of a previous predicted quantity of the predicted quantity in the sequence of predicted quantities based on a solution result of the quadratic programming; and

   determining the target control quantity based on an optimized sequence of predicted quantities.

4. The method according to claim 3, wherein determining the initial error between the second predicted state quantity of the predicted quantity and the second desired state quantity corresponding to the predicted quantity based on the desired trajectory comprises:

   determining a predicted trajectory point corresponding to the predicted quantity based on the second predicted state quantity;
   determining a point on the desired trajectory whose distance to the predicted trajectory point is less than a target threshold as a preview point; and
   determining the second desired state quantity based on a desired motion state of the autonomous vehicle when the autonomous vehicle reaches the preview point.

5. The method according to claim 3 or 4, wherein determining the target control quantity based on the optimized sequence of predicted quantities comprises:

   using a predicted control quantity included in a first predicted quantity in the optimized sequence of predicted quantities as the target control quantity.

6. The method according to any one of claims 3 to 5, wherein the cost function is a nonlinear function, and wherein performing the quadratic programming using the target error as at least a part of the cost function comprises:

   performing a first linearization process on the cost function to obtain a linear cost function; and
   performing the quadratic programming based on the linear cost function.

7. The method according to any one of claims 1 to 6, wherein obtaining the lateral-longitudinal coupled state prediction model of the autonomous vehicle comprises:

   obtaining a dynamic model of the autonomous vehicle; and
   performing a second linearization process on the dynamic model to obtain the lateral-longitudinal coupled state prediction model.

8. The method according to claim 7, wherein obtaining the dynamic model of the autonomous vehicle comprises:
   determining an initial vehicle model based on at least position coordinates of the autonomous vehicle in a world coordinate system, a lateral speed along a lateral axis direction in a vehicle coordinate system, a longitudinal speed along a longitudinal axis direction in the vehicle coordinate system, a yaw angle, and a yaw rate, wherein the lateral axis direction is along the vehicle's front orientation, and wherein the longitudinal axis direction is parallel to the ground and perpendicular to the lateral axis direction.

9. A joint lateral and longitudinal control apparatus for an autonomous vehicle, comprising:

   a first module (810) configured to obtain a lateral-longitudinal coupled state prediction model of the autonomous vehicle and a desired trajectory, wherein the lateral-longitudinal coupled state prediction model is for use in trajectory tracking for the autonomous vehicle;
   a second module (820) configured to obtain a current state quantity and a current control quantity of the autonomous vehicle, wherein the current state quantity indicates a motion state of the autonomous vehicle at a current time, and the current control quantity indicates control applied to the autonomous vehicle at the current time;
   a third module (830) configured to solve for a target control quantity for the trajectory tracking using a model predictive control algorithm based on the current state quantity, the current control quantity, the lateral-longitudinal coupled state prediction model, and the desired trajectory, wherein the model predictive control algorithm includes quadratic programming, wherein a cost function of the quadratic programming includes at least a lateral-longitudinal decoupled target error, wherein the target error is obtained by performing lateral-longitudinal decoupling on an error between a first predicted state quantity output by the lateral-longitudinal coupled state prediction model and a first desired state quantity corresponding to the first predicted state quantity, and wherein the first desired state quantity is associated with the desired trajectory; and
   a fourth module (840) configured to control the autonomous vehicle to perform the trajectory tracking based on the target control quantity.

10. A non-transitory computer-readable storage medium storing computer instructions, wherein execution of the computer instructions causes a computer to perform the method according to any one of claims 1 to 8.

11. A computer program product comprising a computer program, wherein the computer program, when executed by a processor, causes the method according to any one of claims 1 to 8 to be implemented.

FIG. 1

200

Obtain a lateral-longitudinal coupled state prediction model of an autonomous vehicle and a desired trajectory 210

Obtain a current state quantity and a current control quantity of the autonomous vehicle 220

Solve for a target control quantity using a model predictive control algorithm based on the current state quantity, the current control quantity, the lateral-longitudinal coupled state prediction model, and the desired trajectory 230

Control the autonomous vehicle to perform trajectory tracking based on the target control quantity 240

FIG. 2

FIG. 3

FIG. 4

Determine a sequence of predicted quantities for the desired trajectory using the lateral-longitudinal coupled state prediction model based on the current state quantity and the current control quantity — 510

Use a target error as at least part of a cost function to perform quadratic programming — 520

Determine an initial error between a second predicted state quantity of the predicted quantity and a second desired state quantity corresponding to the predicted quantity based on the desired trajectory — 521

Perform lateral-longitudinal decoupling on the initial error to obtain the target error — 522

Use the target error as at least part of a cost function to perform quadratic programming — 523

Optimize a predicted control quantity of a previous predicted quantity of the predicted quantity in the sequence of predicted quantities based on a solution result of the quadratic programming — 524

Determine an optimized control quantity based on the optimized sequence of predicted quantities — 530

FIG. 5

Determine a predicted trajectory point corresponding to the predicted quantity based on the second predicted state quantity — 610

Determine a point on the desired trajectory whose distance to the predicted trajectory point is less than a target threshold as a preview point — 620

Determine the second desired state quantity based on a desired motion state of the autonomous vehicle when the autonomous vehicle reaches the preview point — 630

FIG. 6

Perform a first linearization process on a nonlinear cost function to obtain a linear cost function — 710

Perform the quadratic programming based on the linear cost function — 720

FIG. 7

FIG. 8

FIG. 9